# EUROPEAN PATENT SPECIFICATION

(11) **EP 3 062 520 B1**
(45) Date of publication and mention of the grant of the patent: **29.04.2020**
(21) Application number: 14856500.5
(22) Date of filing: 30.07.2014
(51) Int. Cl.: H04N 21/43, H04N 21/254

(54) **METHOD AND DEVICE FOR AUTOMATICALLY RECOGNIZING NETWORK OPERATOR TO REALIZE DATA CONFIGURATION**
VERFAHREN UND VORRICHTUNG ZUR AUTOMATISCHEN ERKENNUNG EINES NETZBETREIBERS ZUR HERSTELLUNG EINER DATENKONFIGURATION
PROCÉDÉ ET DISPOSITIF DE RECONNAISSANCE AUTOMATIQUE D'OPÉRATEUR DE RÉSEAU POUR RÉALISER UNE CONFIGURATION DE DONNÉES

(30) Priority: 24.10.2013 CN 201310508703
(43) Date of publication of application: 31.08.2016
(73) Proprietor: Shenzhen TCL New Technology Co., LTD, Shenzhen, Guangdong 518052 (CN)
(72) Inventor: HE, Hamson, Shenzhen, Guangdong 518052 (CN)
(74) Representative: Kuhnen & Wacker Patent- und Rechtsanwaltsbüro PartG mbB
(86) International application number: PCT/CN2014/083271
(87) International publication number: WO 2015/058570

(56) References cited:
- EP-A2- 1 883 229
- WO-A1-2011/161582
- WO-A1-2011/161582
- CN-A- 101 594 526
- CN-A- 101 594 526
- CN-A- 101 841 380
- CN-A- 101 888 531
- CN-A- 103 607 598
- JP-A- 2006 101 304
- JP-A- 2011 010 354
- US-A1- 2005 034 174
- US-A1- 2010 265 400

## Description

### BACKGROUND

### Technical Field

The present invention relates to the field of digital television technologies, and in particular, to a method and a device for automatically recognizing a network operator to realize data configuration.

### Related Art

At present, requirements of operators all over the country for network access of an integrated digital television include: program sequencing, program hiding, a channel search speed, a function of main-frequency point locking on startup (acquiring authorization information), computer aided manufacturing (CAM) frequency hopping and other basic functions.

With respect to channel searching, to improve a channel search speed of a terminal, an operator may place program-related information in a network information table (NIT) on a frequency point for sending the information, where the information includes a frequency point of the program, a symbol rate, a modulation scheme, and packet identifiers (PID) of related transport streams (TS), and the like. In the digital television industry, the frequency point is referred to as a main frequency point of the network, and the terminal can realize rapid channel search by using the frequency point. However, because operators all over the country are different, settings of the main frequency points by the operators also have relatively great differences. One aspect is that values of the main frequency points are different, and another aspect is that quantities of the main frequency points are different, resulting in huge impact on user experience of an integrated digital television.

With respect to the program sequencing and program hiding, multiple sets of programs may be placed on a frequency point of a digital television, and a sequencing manner and a hiding manner of a program list corresponding to these programs are separately defined by operators, so as to provide a receive terminal with an ordered program list sequencing manner. Because of separate defining by the operators, sequencing information and hiding conditions are different all over the country, but integrated digital televisions are sold within a large area in the country. Therefore, a rapid and accurate customization scheme cannot be provided to a local operator, causing a great obstacle to sales of integrated digital televisions.

With reference to a program authorization mode of a broadcasting and television operator, when a user recharges a smart card, the operator may send authorization information through a broadcasting and television network, to prolong service time. However, the mode has great differences all over the country. To save bandwidth resources, some operators may change an original operation of sending authorization information on each frequency point to sending authorization information only on a main frequency point. When a user does not switch to the main frequency point during watching, the user will never receive the authorization information, causing that the program cannot be normally deciphered.

Therefore, to acquire authorization from a broadcasting and television office (purchase a smart card), a television manufacturer needs to meet basic requirements of the broadcasting and television office for integrated digital televisions, adapt as much as possible to different manners of sending different cable television network service information, sequencing programs, hiding programs, and searching for a channel, and solve other problems that severely affect usage by a user.

To meet these requirements of the network operators for a customized function, a television manufacturer integrates the function into a software system of a product of the television manufacturer, and when a television is sold to a region managed by an operator, an after-sales engineer manually operates a remote control to enter a factory menu and select a specified operator, thereby enabling a local customized function.

However, the foregoing manner of selecting a network operator greatly increases workload and work difficulty of commissioning by the after-sales engineer. More severely, once an after-sales engineer fails to select a specified operator for a user during television installation, user experience of an integrated digital television may be affected (for example, programs are disordered, and a channel search speed is slow), or it may even cause that the user cannot watch television programs at an uncertain time.

Patent Application WO-A-2011/161582 discloses a method for performing channel installation in a television receiver. The method could be used to perform high quality error-free installations in Internet enabled televisions. Further, this could also reduce field call rates due to wrongly selected region. The disclosed method is applicable for any digital transmission standards for television.

### SUMMARY

A main objective of the present invention is to provide a method and a device for automatically recognizing a network operator to realize data configuration, so that automatic recognition of a network operator is realized and data configuration is completed, thereby effectively reducing the workload and work difficulty caused by manually selecting a network operator, and thus increasing the channel search efficiency and lessening the problem that a user cannot watch television normally due to the fact that a customized function is not activated.

The present invention is defined by the appended claims.

It is hereby provided a method for automatically recognizing a network operator to realize data configuration, where the method includes:
acquiring network information about various frequency points of a digital television, and according to the acquired network information about the various frequency points of the digital television, determining a network operator of a current location region, the network information being a Network Information Table;
matching the determined network operator with pre-stored network operators so as to match a pre-stored network operator which is consistent with the determined network operator; and
according to a mapping relationship between a pre-stored television configuration parameter and the pre-stored network operator, determining a television configuration parameter corresponding to the matched pre-stored network operator, and according to the determined television configuration parameter, completing data configuration;
the operation of according to the acquired network information about the various frequency points of the digital television, determining the network operator of the current location region comprising:
   determining network operator identifiers that correspond to the various frequency points of the digital television, according to the acquired network information about the various frequency points of the digital television; and
   determining, among the determined network operator identifiers, a network operator whose identifier corresponds to the largest quantity of frequency points as the network operator of the current location region.

Preferably, before the step of acquiring network information about various frequency points of a digital television, the method further includes:
receiving a channel search instruction, and performing the step of acquiring network information about various frequency points of a digital television when the channel search instruction is received.

Preferably, the step of according to the acquired network information about the various frequency points of the digital television, determining a network operator of a current location region includes:
according to the acquired network information about the various frequency points of the digital television, determining the network operator of the current location region; and
acquiring a quantity of the determined network operators.

Preferably, the network operator identifier includes a physical address of the network operator or a recognition code of the network operator.

Preferably, when multiple network operators are acquired, the according to the acquired network information about the various frequency points of the digital television, determining a network operator of a current location region includes:
determining, from the acquired network information about the various frequency points of the digital television, network operator region names that correspond to the various frequency points of the digital television; and
determining, among the determined network operator region names, a network operator whose region name corresponds to the largest quantity of frequency points as the network operator of the current location region; and
on condition that the network operator determined according to the network operator identifiers is consistent with the network operator determined according to network operator region names, determining the consistent network operator as the network operator of the current location region.

The present invention further provides a device for automatically recognizing a network operator to realize data configuration, where the device includes:
a processing module, configured to acquire network information about various frequency points of a digital television, and according to the acquired network information about the various frequency points of the digital television, determine a network operator of a current location region, the network information being a Network Information Table;
an analysis module, configured to match the determined network operator with pre-stored network operators so as to match a pre-stored network operator which is consistent with the determined network operator;
the processing module, further configured to: according to a mapping relationship between a pre-stored television configuration parameter and the pre-stored network operator, determine a television configuration parameter corresponding to the matched pre-stored network operator; and
a configuration module, configured to: according to the determined television configuration parameter, complete data configuration;
the processing module (10) being further configured to:
   determine network operator identifiers that correspond to the various frequency points of the digital television, according to the acquired network information about the various frequency points of the digital television; and
   determine, among the determined multiple network operator identifiers, a network operator whose identifier corresponds to the largest quantity of frequency points as the network operator of the current location region.

Preferably, the processing module is further configured to receive a channel search instruction; and acquire the network information about the various frequency points of the digital television when the channel search instruction is received.

Preferably, the processing module is further configured to according to the acquired network information about the various frequency points of the digital television, determine a network operator of a current location region; and acquire a quantity of the determined network operators.

Preferably, the network operator identifier includes a physical address of the network operator or a recognition code of the network operator.

Preferably, when multiple network operators are acquired,
the processing module is further configured to: according to the acquired network information about the various frequency points of the digital television, determine network operator region names that correspond to the various frequency points of the digital television; and
determine, among the determined network operator region names, a network operator whose region name corresponds to the largest quantity of frequency points as the network operator of the current location region; and
on condition that the network operator determined according to the network operator identifiers is consistent with the network operator determined according to network operator region names, determine the consistent network operator as the network operator of the current location region.

Compared with the prior art, in the present invention, a network operator of a current location region is determined according to acquired network information about various frequency points of a digital television; the determined network operator is matched with pre-stored network operators so as to match a pre-stored network operator which is consistent with the determined network operator; a television configuration parameter corresponding to the matched pre-stored network operator is determined according to a mapping relationship between a pre-stored television configuration parameter and the pre-stored network operator; and data configuration is completed according to the determined television configuration parameter. Automatic recognition of a network operator is realized and data configuration is completed, thereby effectively reducing the workload and work difficulty caused by manually selecting a network operator, and thus increasing the channel search efficiency and lessening the problem that a user cannot watch television normally due to the fact that a customized function is not activated.

### BRIEF DESCRIPTION OF THE DRAWINGS

FIG. 1 is a schematic flowchart of a first embodiment of a method for automatically recognizing a network operator to realize data configuration according to the present invention;
FIG. 2 is a schematic flowchart of a second embodiment of a method for automatically recognizing a network operator to realize data configuration according to the present invention;
FIG. 3 is a schematic flowchart of a third embodiment of a method for automatically recognizing a network operator to realize data configuration according to the present invention;
FIG. 4 is a schematic flowchart of a fourth embodiment of a method for automatically recognizing a network operator to realize data configuration according to the present invention; and
FIG. 5 is a diagram of functional modules of a preferred embodiment of a device for automatically recognizing a network operator to realize data configuration according to the present invention.

Achievement of objectives, functional characteristics, and advantages of the present invention will be further described with reference to the embodiments and the accompanying drawings.

### DETAILED DESCRIPTION

It should be understood that, specific embodiments described herein are merely used for explaining the present invention, but are not intended to limit the present invention.

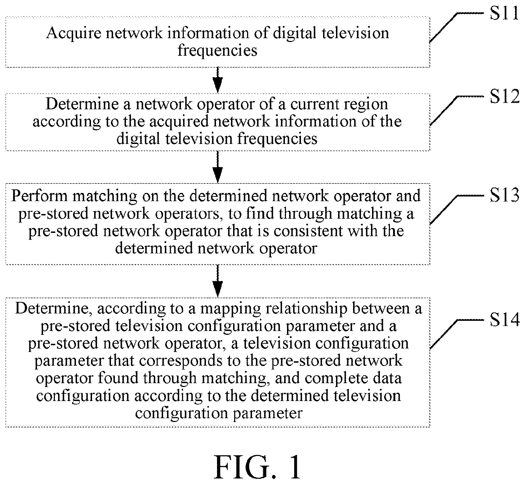

FIG. 1 is a schematic flowchart of a first embodiment of a method for automatically recognizing a network operator to realize data configuration according to the present invention.

It should be emphasized that the flowchart shown in FIG. 1 is merely a preferred embodiment, and a person skilled in the art should know that any embodiment built with the concept of the present invention shall not depart from the scope covered by the following technical solutions.

Network information about various frequency points of a digital television is acquired, and a network operator of a current location region is determined according to the acquired network information about the various frequency points of the digital television; the determined network operator is matched with pre-stored network operators so as to match a pre-stored network operator which is consistent with the determined network operator; and a television configuration parameter corresponding to the matched pre-stored network operator is determined according to a mapping relationship between a pre-stored television configuration parameter and the pre-stored network operator, and data configuration is completed according to the determined television configuration parameter.

Specific steps of gradually achieving automatic recognition of a network operator to complete data configuration according to this embodiment are as follows:
Step S11: Acquire network information about various frequency points of a digital television.
Step S12: According to the acquired network information about the various frequency points of the digital television, determine a network operator of a current location region.

Specifically, when a channel search instruction sent by a user is received, the user may send the channel search instruction by using a remote control that is connected to an integrated digital television for communication, or trigger the channel search instruction by using a channel search button on an integrated digital television. A linked list used for storing network information about various frequency points of a digital television is created, network information about various frequency points of a digital television is acquired, and the acquired network information about the various frequency points of the digital television is stored in the created linked list according to a preset format. The network information about the various frequency points of the digital television is sent on a preset frequency point by using a NIT table, and each integrated digital television that has sent the channel search instruction receives the network information. The network information about the various frequency points of the digital television includes a frequency point of a digital television program, a symbol rate, a modulation scheme, a network operator region name and/or a network operator identifier, and PIDs of related TSs. The preset frequency point is generally used as a main frequency point of a network operator, and the integrated digital television can rapidly perform channel search by using the frequency point. The network information about the various frequency points of the digital television may also be sent by using any applicable carrier.

Analysis is performed to determine the quantity of the network operators that correspond to the acquired network information about the various frequency points of the digital television. If only one network operator is acquired, the network operator is determined as the network operator of the current location region. In other embodiments of the present invention, the quantity of the network operators that correspond to the acquired network information about the various frequency points of the digital television may also be greater than one.

Step S13: Match the determined network operator with pre-stored network operators so as to match a pre-stored network operator which is consistent with the determined network operator.

Step S14: According to a mapping relationship between a pre-stored television configuration parameter and the pre-stored network operator, determine a television configuration parameter corresponding to the matched pre-stored network operator, and according to the determined television configuration parameter, complete data configuration.

Specifically, after the network operator of the current location region is determined, the determined network operator is matched with pre-stored network operators so as to match a pre-stored network operator which is consistent with the determined network operator. That is, information about network operators in each region is pre-stored in the integrated digital television, where the information includes network operator identifiers in each region and network operator region names in each region, and may also include television configuration parameters that correspond to the network operators, and a mapping relationship between a network operator and a corresponding television configuration parameter is stored. When the pre-stored network operator which is consistent with the determined network operator is matched, a television configuration parameter corresponding to the matched pre-stored network operator is determined according to a mapping relationship between a pre-stored television configuration parameter and the pre-stored network operator. The determined television configuration parameter is acquired, and data configuration is completed according to the acquired television configuration parameter. In other embodiments of the present invention, it may also be that information about a specified network operator is received, where the information about the specified network operator is input by a user. A television configuration parameter of the specified network operator is determined according to a mapping relationship between a pre-stored television configuration parameter and the pre-stored network operator, and data configuration is completed according to the determined television configuration parameter. That is, a customized function of the integrated digital television is realized. By adding the function of manually inputting information about a specified network operator, when the network operator of the current location region cannot be automatically acquired according to received program information, the network operator of the current location region can be manually determined, to ensure that the user can complete data configuration for the integrated digital television, that is, realize the customized function of the integrated digital television.

A network operator of a current location region is determined according to acquired network information about various frequency points of a digital television; the determined network operator is matched with pre-stored network operators so as to match a pre-stored network operator which is consistent with the determined network operator; a television configuration parameter corresponding to the matched pre-stored network operator is determined according to a mapping relationship between a pre-stored television configuration parameter and the pre-stored network operator; and data configuration is completed according to the determined television configuration parameter. Automatic recognition of a network operator is realized and data configuration is completed, thereby effectively reducing the workload and work difficulty caused by manually selecting a network operator, and thus increasing the channel search efficiency and lessening the problem that a user cannot watch television normally due to the fact that a customized function is not activated.

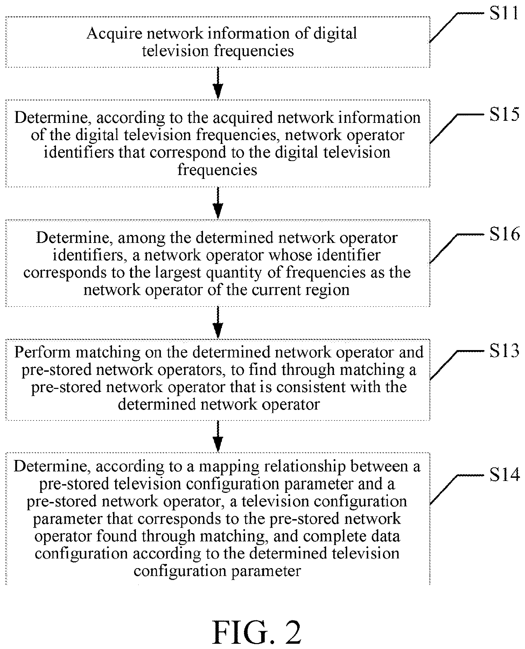

FIG. 2 is a schematic flowchart of a second embodiment of a method for automatically recognizing a network operator to realize data configuration according to the present invention.

Based on the foregoing first embodiment, when multiple network operators are acquired, step S11 includes:
Step S15: According to the acquired network information about the various frequency points of the digital television, determine frequency points of digital television programs and network operator identifiers that correspond to the frequency points.
Step S16: Determine, among the determined network operator identifiers, a network operator whose identifier corresponds to the largest quantity of frequency points as the network operator of the current location region.

Specifically, data related to the operators among the network information about the various frequency points of the digital television is sent by using a NIT table, and a filter is started to filter data in the NIT table. The NIT table is analyzed to obtain network operator identifiers that correspond to the various frequency points of the digital television. The network operator identifiers corresponding to the frequency points may be same or different. The obtained frequency points and the corresponding network operator identifiers are stored in a created linked list, and the network operators are sequenced in a descending order of the quantity of corresponding frequency points. Analysis is performed to determine a network operator whose identifier corresponds to the largest quantity of frequency points, that is, to determine a network operator that ranks first in the sequence. The network operator corresponding to the largest quantity of frequency points is determined as the network operator of the current location region, that is, the network operator ranking first in the sequence is determined as the network operator of the current location region.

The network operator identifier is a physical address of the network operator or a recognition code of the network operator, or any other recognition information applicable for uniquely recognizing identity of the network operator.

Network information about various frequency points of a digital television is acquired, and a network operator of a current location region is determined according to network operator identity information included in the acquired network information about the various frequency points of the digital television. The determined network operator is matched with pre-stored network operators so as to match a pre-stored network operator which is consistent with the determined network operator. a television configuration parameter corresponding to the matched pre-stored network operator is determined according to a mapping relationship between a pre-stored television configuration parameter and the pre-stored network operator, and data configuration is completed according to the determined television configuration parameter. Automatic recognition of a network operator is realized and data configuration is completed, thereby effectively reducing the workload and work difficulty caused by manually selecting a network operator, and thus increasing the channel search efficiency and lessening the problem that a user cannot watch television normally due to the fact that a customized function is not activated.

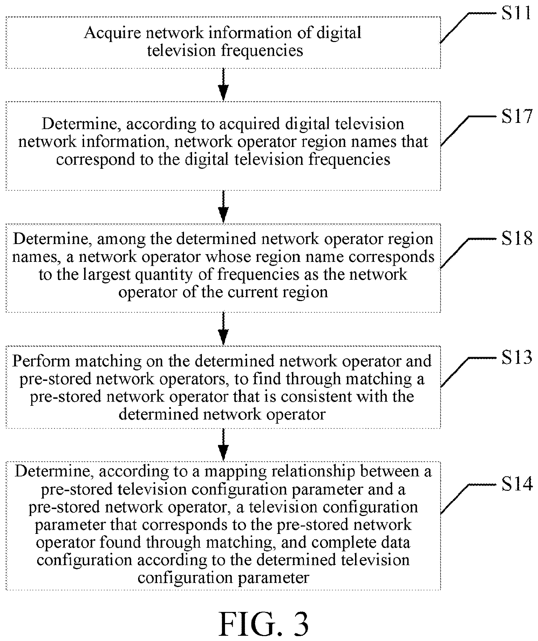

FIG. 3 is a schematic flowchart of a third embodiment of a method for automatically recognizing a network operator to realize data configuration according to the present invention.

Based on the foregoing first embodiment, when multiple network operators are acquired, step S11 further includes:
Step S17: According to the acquired network information about the various frequency points of the digital television, determine frequency points of digital television programs and network operator region names that correspond to the frequency points.
Step S18: Determine, among the determined network operator region names, a network operator whose region name corresponds to the largest quantity of frequency points as the network operator of the current location region.

Specifically, network information about various frequency points of a digital television is acquired. If the network information about the various frequency points of the digital television is sent by using a NIT table, a filter is started to filter data in the NIT table. The NIT table is analyzed to obtain network operator region names that correspond to the various frequency points of the digital television, and the network operator region names corresponding to the frequency points may be same or different. The obtained frequency points and the corresponding network operator region names are stored in a created linked list, and the network operators are sequenced in a descending order of the quantity of corresponding frequency points. Analysis is performed to determine a network operator whose region name corresponds to the largest quantity of frequency points, that is, to determine a network operator that ranks first in the sequence. The network operator corresponding to the largest quantity of frequency points is determined as the network operator of the current location region, that is, the network operator ranking first in the sequence is determined as the network operator of the current location region.

Network information about various frequency points of a digital television is acquired, and a network operator of a current location region is determined according to a network operator region name included in the acquired network information about the various frequency points of the digital television. It is realized that when a network operator cannot be automatically recognized according to a network operator identifier, a network operator of a current location region is determined according to a network operator region name and data configuration is completed, so that automatic recognition of a network operator is further ensured, thereby effectively reducing the workload and work difficulty caused by manually selecting a network operator, and thus increasing the channel search efficiency and lessening the problem that a user cannot watch television normally due to the fact that a customized function is not activated.

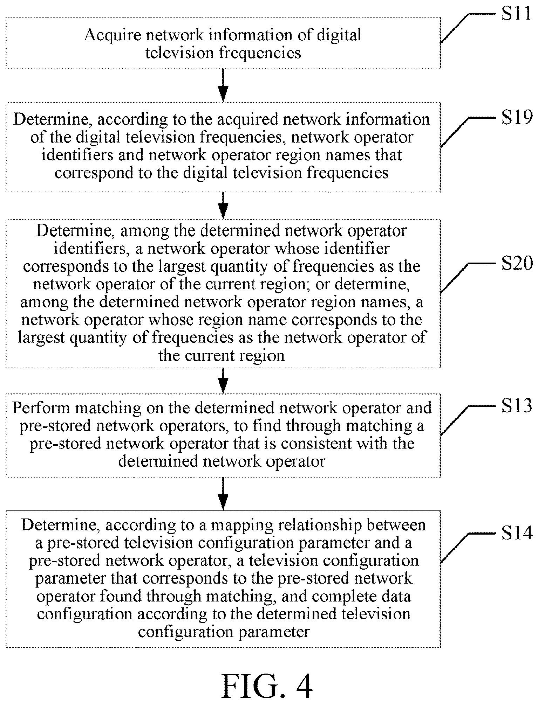

FIG. 4 is a schematic flowchart of a fourth embodiment of a method for automatically recognizing a network operator to realize data configuration according to the present invention.

Based on the foregoing first embodiment, when multiple network operators are acquired, step S11 further includes:
Step S19: According to the acquired network information about the various frequency points of the digital television, determine network operator identifiers and network operator region names that correspond to the various frequency points of the digital television.
Step S20: Determine, among the determined network operator identifiers, a network operator whose identifier corresponds to the largest quantity of frequency points as the network operator of the current location region; or determine, among the determined network operator region names, a network operator whose region name corresponds to the largest quantity of frequency points as the network operator of the current location region.

Specifically, network information about various frequency points of a digital television is acquired. If the network information about the various frequency points of the digital television is sent by using a NIT table, a filter is started to filter data in the NIT table. The NIT table is analyzed to obtain network operator identifiers and network operator region names that correspond to the various frequency points of the digital television. The network operator identifiers corresponding to the frequency points may be same or different. Similarly, the network operator region names corresponding to the frequency points may be same or different. The obtained frequency points and the network operator identifiers corresponding to the frequency points are stored in a created linked list, and the obtained frequency points and the network operator region names corresponding to the frequency points are stored in a created linked list. The network operator identifiers are sequenced in a descending order of the quantity of corresponding frequency points, and analysis is performed to determine a network operator whose identifier corresponds to the largest quantity of frequency points, that is, to determine a network operator whose identifier ranks first in the sequence. The network operator region names are sequenced in a descending order of the quantity of corresponding frequency points, and analysis is performed to determine a network operator whose region name corresponds to the largest quantity of frequency points, that is, to determine a network operator whose region name ranks first in the sequence. The network operator whose identifier corresponds to the largest quantity of frequency points is determined as the network operator of the current location region, that is, the network operator whose identifier ranks first in the sequence is determined as the network operator of the current location region; or the network operator whose region name corresponds to the largest quantity of frequency points is determined as the network operator of the current location region, that is, the network operator whose region name ranks first in the sequence is determined as the network operator of the current location region. In other embodiments of the present invention, when a network operator, of a current location region, determined according to a network operator identifier is consistent with a network operator, of the current location region, determined according to a network operator region name, the consistent network operator may also be determined as the network operator of the current location region, so that accuracy of automatically recognizing the network operator of the current location region can be effectively improved, the network operator of the current location region can be found for a user in time and accurately, a customized function of an integrated digital television is realized, and the problem that a user cannot watch television normally due to the fact that a customized function is not activate is lessened.

Network information about various frequency points of a digital television is acquired, and a network operator of a current location region is determined according to a network operator region name and an identifier included in the acquired network information about the various frequency points of the digital television. Automatic recognition of a network operator is further ensured, thereby effectively reducing the workload and work difficulty caused by manually selecting a network operator, thereby improving channel search efficiency and user experience.

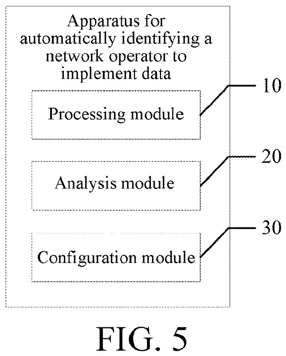

FIG. 5 is a diagram of functional modules of a preferred embodiment of a device for automatically recognizing a network operator to realize data configuration according to the present invention. The device includes a processing module 10, an analysis module 20, and a configuration module 30.

The processing module 10 is configured to acquire network information about various frequency points of a digital television, and according to the acquired network information about the various frequency points of the digital television, determine a network operator of a current location region.

Specifically, the device for automatically recognizing a network operator to realize data configuration is preferably an integrated digital television, and may also be any other applicable television program playback device. When a channel search instruction sent by a user is received, the user may send the channel search instruction by using a remote control that is connected to an integrated digital television for communication, or trigger the channel search instruction by using a channel search button on an integrated digital television. The processing module 10 creates a linked list used for storing network information about various frequency points of a digital television, acquires network information about various frequency points of a digital television, and stores the acquired network information about the various frequency points of the digital television in the created linked list according to a preset format. The network information about the various frequency points of the digital television is sent on a preset frequency point by using a NIT table, and each integrated digital television that has sent the channel search instruction receives the network information. The network information about the various frequency points of the digital television includes a frequency point of a digital television program, a symbol rate, a modulation scheme, a network operator region name and/or a network operator identifier, and PIDs of related TSs. The preset frequency point is generally used as a main frequency point of a network operator, and the integrated digital television can rapidly perform channel search by using the frequency point. The network information about the various frequency points of the digital television may also be sent by using any applicable carrier.

The analysis module 20 performs analysis to determine the quantity of the network operators that correspond to the acquired network information about the various frequency points of the digital television. If only one network operator is acquired, the processing module 10 determines the network operator as the network operator of the current location region. In other embodiments of the present invention, the quantity of the network operators that correspond to the network information, of the various frequency points of the digital television, acquired by the processing module 10 may also be greater than one.

The analysis module 20 is configured to match the determined network operator with pre-stored network operators so as to match a pre-stored network operator which is consistent with the determined network operator.

The processing module 10 is further configured to: according to a mapping relationship between a pre-stored television configuration parameter and the pre-stored network operator, determine a television configuration parameter corresponding to the matched pre-stored network operator.

The configuration module 30 is configured to: according to the determined television configuration parameter, complete data configuration.

Specifically, after the network operator of the current location region is determined by the processing module 10, the analysis module 20 matches the determined network operator with pre-stored network operators so as to match a pre-stored network operator which is consistent with the determined network operator. That is, information about network operators in each region is pre-stored in the integrated digital television, where the information includes network operator identifiers in each region and network operator region names in each region, and may also include television configuration parameters that correspond to the network operators, and a mapping relationship between a network operator and a corresponding television configuration parameter is stored. When the pre-stored network operator which is consistent with the determined network operator is matched by the analysis module 20, according to a mapping relationship between a pre-stored television configuration parameter and the pre-stored network operator, the processing module 10 determines a television configuration parameter corresponding to the matched pre-stored network operator, and acquires the determined television configuration parameter. According to the acquired television configuration parameter, the configuration module 30 completes data configuration. In other embodiments of the present invention, it may also be that information about a specified network operator is received, where the information about the specified network operator is input by a user. According to a mapping relationship between a pre-stored television configuration parameter and the pre-stored network operator, a processing module 10 determines a television configuration parameter of the specified network operator, and according to the determined television configuration parameter, a configuration module 30 completes data configuration, that is, realizes a customized function of an integrated digital television. By adding the function of manually inputting information about a specified network operator, when the network operator of the current location region cannot be automatically acquired according to received program information, the network operator of the current location region can be manually determined, to ensure that the user can complete data configuration for the integrated digital television, that is, realize the customized function of the integrated digital television.

The processing module 10 acquires network information about various frequency points of a digital television and determines a network operator of a current location region. The analysis module 20 matches the determined network operator with pre-stored network operators so as to match a pre-stored network operator which is consistent with the determined network operator. According to a mapping relationship between a pre-stored television configuration parameter and the pre-stored network operator, The processing module 10 determines, a television configuration parameter corresponding to the matched pre-stored network operator, and according to the determined television configuration parameter, the configuration module 30 completes data configuration. Automatic recognition of a network operator is realized and data configuration is completed, thereby effectively reducing the workload and work difficulty caused by manually selecting a network operator, and thus increasing the channel search efficiency and lessening the problem that a user cannot watch television normally due to the fact that a customized function is not activated.

Further, the processing module 10 is further configured to: according to the acquired network information about the various frequency points of the digital television, determine frequency points of digital television programs and network operator identifiers that correspond to the frequency points; and
determine, among the determined multiple network operator identifiers, a network operator whose identifier corresponds to the largest quantity of frequency points as the network operator of the current location region.

Specifically, the processing module 10 acquires network information about various frequency points of a digital television. If the network information about the various frequency points of the digital television is sent by using a NIT table, a filter is started to filter data in the NIT table. The NIT table is analyzed to obtain network operator identifiers that correspond to the various frequency points of the digital television, and the network operator identifiers corresponding to the frequency points may be same or different. The processing module 10 stores the obtained frequency points and the corresponding network operator region names in a created linked list. The analysis module 20 sequences the network operators in a descending order of the quantity of corresponding frequency points, and performs analysis to determine a network operator whose identifier corresponds to the largest quantity of frequency points, that is, to determine a network operator that ranks first in the sequence. The network operator corresponding to the largest quantity of frequency points is determined as the network operator of the current location region, that is, the network operator ranking first in the sequence is determined as the network operator of the current location region. The network operator identifier is a physical address of the network operator or a recognition code of the network operator, or any other recognition information applicable for uniquely recognizing identity of the network operator.

The processing module 10 acquires network information about various frequency points of a digital television, and determines a network operator of a current location region according to network operator identity information included in the network information about the various frequency points of the digital television. The analysis module 20 matches the determined network operator with pre-stored network operators so as to match a pre-stored network operator which is consistent with the determined network operator. According to a mapping relationship between a pre-stored television configuration parameter and the pre-stored network operator, the processing module 10 determines a television configuration parameter corresponding to the matched pre-stored network operator. According to the determined television configuration parameter, the configuration module 30 completes data configuration. Automatic recognition of a network operator is realized and data configuration is completed, thereby effectively reducing the workload and work difficulty caused by manually selecting a network operator, and thus increasing the channel search efficiency and lessening the problem that a user cannot watch television normally due to the fact that a customized function is not activated.

Further, the processing module 10 is further configured to determine, according to the acquired multiple pieces of network information about the various frequency points of the digital television, frequency points of digital television programs and network operator region names that correspond to the frequency points; and
determine, among the determined network operator region names, a network operator whose region name corresponds to the largest quantity of frequency points as the network operator of the current location region.

Specifically, the processing module 10 acquires network information about various frequency points of a digital television. If the network information about the various frequency points of the digital television is sent by using a NIT table, a filter is started to filter data in the NIT table. The NIT table is analyzed to obtain network operator region names that correspond to the various frequency points of the digital television, and the network operator region names corresponding to the frequency points may be same or different. The analysis module 20 stores the obtained frequency points and the corresponding network operator region names in a created linked list, sequences the network operators in a descending order of the quantity of corresponding frequency points, and performs analysis to determine a network operator whose region name corresponds to the largest quantity of frequency points, that is, to determine a network operator that ranks first in the sequence. The network operator corresponding to the largest quantity of frequency points is determined as the network operator of the current location region, that is, the network operator ranking first in the sequence is determined as the network operator of the current location region.

The processing module 10 acquires network information about various frequency points of a digital television, and determines a network operator of a current location region according to a network operator region name included in the network information about various frequency points of a digital television. It is realized that when a network operator cannot be automatically recognized according to a network operator identifier, a network operator of a current location region is determined according to a network operator region name and data configuration is completed; automatic recognition of a network operator is further ensured, thereby effectively reducing the workload and work difficulty caused by manually selecting a network operator, and thus increasing the channel search efficiency and lessening the problem that a user cannot watch television normally due to the fact that a customized function is not activated.

Further, the processing module 10 is further configured to: according to the acquired network information about the various frequency points of the digital television, determine network operator identifiers and network operator region names that correspond to the various frequency points of the digital television; and
determine, among the determined network operator identifiers, a network operator whose identifier corresponds to the largest quantity of frequency points as the network operator of the current location region; or determine, among the determined network operator region names, a network operator whose region name corresponds to the largest quantity of frequency points as the network operator of the current location region.

Specifically, the processing module 10 acquires network information about various frequency points of a digital television. If the network information about the various frequency points of the digital television is sent by using a NIT table, a filter is started to filter data in the NIT table. The NIT table is analyzed to obtain network operator identifiers and network operator region names that correspond to the various frequency points of the digital television. The network operator identifiers corresponding to the frequency points may be same or different. Similarly, the network operator region names corresponding to the frequency points may be same or different. The processing module 10 stores the obtained frequency points and the network operator identifiers corresponding to the frequency points in a created linked list, and stores the obtained frequency points and the network operator region names corresponding to the frequency points in a created linked list. The analysis module 20 sequences the network operator identifiers in a descending order of the quantity of corresponding frequency points, and performs analysis to determine a network operator whose identifier corresponds to the largest quantity of frequency points, that is, to determine a network operator whose identifier ranks first in the sequence. The analysis module 20 sequences the network operator region names in a descending order of the quantity of corresponding frequency points, and performs analysis to determine a network operator whose region name corresponds to the largest quantity of frequency points, that is, to determine a network operator whose region name ranks first in the sequence. The network operator whose identifier corresponds to the largest quantity of frequency points is determined as the network operator of the current location region, that is, the network operator whose identifier ranks first in the sequence is determined as the network operator of the current location region; or the network operator whose region name corresponds to the largest quantity of frequency points is determined as the network operator of the current location region, that is, the network operator whose region name ranks first in the sequence is determined as the network operator of the current location region.

In other embodiments of the present invention, when a network operator, of a current location region, determined by a processing module 10 according to network operator identifiers is consistent with a network operator, of the current location region, determined by the processing module 10 according to network operator region names, the consistent network operator may also be determined as the network operator of the current location region, so that accuracy of automatically recognizing the network operator of the current location region can be effectively improved, the network operator of the current location region can be found for a user in time and accurately, a customized function of an integrated digital television is realized, and the problem that a user cannot watch television normally due to the fact that a customized function is not activated is lessend.

The processing module 10 acquires network information about various frequency points of a digital television, and determines a network operator of a current location region according to a network operator region name and an identifier included in the network information about the various frequency points of the digital television. Automatic recognition of a network operator is further ensured, thereby effectively reducing the workload and work difficulty caused by manually selecting a network operator, thereby improving channel search efficiency and user experience.

The foregoing descriptions are merely preferred embodiments of the present invention, but are not intended to limit the patent scope of the present invention.

## Claims

1. A method for automatically recognizing a network operator so as to realize data configuration of an integrated digital television, thereby implementing a customization function of said integrated digital television, wherein the method comprises:
- acquiring network information about various frequency points of a digital television, and according to the acquired network information about the various frequency points of the digital television, determining a network operator of a current location region, the network information being a Network Information Table;
- determining a network operator of a current location region;
- matching the determined network operator of said current location region with pre-stored network operators so as to match a pre-stored network operator which is consistent with the determined network operator;
- according to a mapping relationship between a pre-stored television configuration parameter and the pre-stored network operator, determining a television configuration parameter corresponding to the matched pre-stored network operator;
and according to the determined television configuration parameter, completing data configuration;
**characterized in that**, the operation of determining the network operator of the current location region comprises:
determining network operator identifiers that correspond to the various frequency points of the digital television, and
determining, among the determined network operator identifiers, a network operator whose identifier corresponds to the largest quantity of frequency points as the network operator of the current location region.

2. The method for automatically recognizing a network operator to realize data configuration according to claim 1, wherein before the step of acquiring network information about various frequency points of a digital television, the method further comprises:
receiving a channel search instruction, and performing the step of acquiring network information about various frequency points of a digital television when the channel search instruction is received.

3. The method for automatically recognizing a network operator to realize data configuration according to claim 1, wherein the step of according to the acquired network information about the various frequency points of the digital television, determining a network operator of a current location region comprises:
according to the acquired network information about the various frequency points of the digital television, determining the network operator of the current location region; and acquiring a quantity of the determined network operators.

4. The method for automatically recognizing a network operator to realize data configuration according to claim 1, wherein the network operator identifier comprises a physical address of the network operator or a recognition code of the network operator.

5. The method for automatically recognizing a network operator to realize data configuration according to claim 1, wherein, the step of according to the acquired network information about the various frequency points of the digital television, determining the network operator of current location region further comprises:
determining, from acquired network information about the various frequency points of digital television, network operator region names that correspond to the various frequency points of the digital television;
determining, among the determined network operator region names, a network operator whose region name corresponds to the largest quantity of frequency points;
and on condition that the network operator determined according to the network operator identifiers is consistent with the network operator determined according to network operator region names, determining the consistent network operator as the network operator of the current location region.

6. A device for automatically recognizing a network operator so as to realize data configuration of an integrated digital television, thereby implementing a customization function of said integrated digital television, wherein the device comprises:
a processing module (10), configured to acquire network information about various frequency points of a digital television, the network information being a Network Information Table; said processing module (1) being further configured to determine a network operator of a current location region;
an analysis module (20), configured to match the determined network operator of said current location region with pre-stored network operators so as to match a pre-stored network operator which is consistent with the determined network operator;
the processing module (10) being further configured to: according to a mapping relationship between a pre-stored television configuration parameter and the pre-stored network operator, determine a television configuration parameter corresponding to the matched pre-stored network operator; and
a configuration module (30), configured to: according to the determined television configuration parameter, complete data configuration;
**characterized in that**, the processing module (10) is further configured to:
determine network operator identifiers that correspond to the various frequency points of the digital television, and
determine, among the determined multiple network operator identifiers, a network operator whose identifier corresponds to the largest quantity of frequency points as the network operator of the current location region.

7. The device for automatically recognizing a network operator to realize data configuration according to claim 6, wherein the processing module (10) is further configured to receive a channel search instruction; and acquire the network information about the various frequency points of the digital television when the channel search instruction is received.

8. The device for automatically recognizing a network operator to realize data configuration according to claim 6, wherein the processing module is further configured to according to the acquired network information about the various frequency points of the digital television, determine a network operator of a current location region; and acquire a quantity of the determined network operators.

9. The device for automatically recognizing a network operator to realize data configuration according to claim 6, wherein the network operator identifier comprises a physical address of the network operator or a recognition code of the network operator.

10. The device for automatically recognizing a network operator to realize data configuration according to claim 6, wherein
the processing module (10) is further configured to: according to the acquired network information about the various frequency points of the digital television , determine network operator region names that correspond to the various frequency points of the digital television;
determine, among the determined network operator region names, a network operator whose region name corresponds to the largest quantity of frequency points; and
on condition that the network operator determined according to the network operator identifiers is consistent with the network operator determined according to network operator region names, determine the consistent network operator as the network operator of the current location region.

## Patentansprüche

1. Verfahren zum automatischen Erkennen eines Netzwerkbetreibers, um eine Datenkonfiguration eines integrierten digitalen Fernsehers zu erkennen, wodurch eine Benutzerkonfigurationsfunktion des integrierten digitalen Fernsehers implementiert wird,
wobei das Verfahren aufweist:
- Erhalten von Netzwerkinformationen über verschiedene Frequenzpunkte eines digitalen Fernsehers, und, gemäß den erhaltenen Netzwerkinformationen über die verschiedenen Frequenzpunkte des digitalen Fernsehers, Bestimmen eines Netzwerkbetreibers einer gegenwärtigen Ortsregion, wobei die Netzwerkinformationen eine Netzwerkinformationstabelle sind;
- Bestimmen eines Netzwerkbetreibers einer gegenwärtigen Ortsregion;
- Abgleichen des bestimmten Netzwerkbetreibers der gegenwärtigen Ortsregion mit vorgespeicherten Netzwerkbetreibern, um einen vorgespeicherten Netzwerkbetreiber, der mit dem bestimmten Netzwerkbetreiber übereinstimmt, abzugleichen;
- gemäß einer Zuordnungsbeziehung zwischen einem vorgespeicherten Fernseherkonfigurationsparameter und dem vorgespeicherten Netzwerkbetreiber, Bestimmen eines Fernseherkonfigurationsparameters, der dem abgeglichenen vorgespeicherten Netzwerkbetreiber entspricht;
und gemäß dem bestimmten Fernseherkonfigurationsparameter, Abschließen der Datenkonfiguration;
**dadurch gekennzeichnet, dass** der Vorgang des Bestimmens des Netzwerkbetreibers der gegenwärtigen Ortsregion aufweist:
Bestimmen von Netzwerkbetreiberidentifikatoren, die den verschiedenen Frequenzpunkten des digitalen Fernsehers entsprechen, und
Bestimmen, aus den bestimmten Netzwerkbetreiberidentifikatoren, eines Netzwerkbetreibers, dessen Identifikator der größten Menge an Frequenzpunkten entspricht, als den Netzwerkbetreiber der gegenwärtigen Ortsregion.

2. Verfahren zum automatischen Erkennen eines Netzwerkbetreibers, um eine Datenkonfiguration zu erkennen, nach Anspruch 1, wobei vor dem Schritt des Erhaltens von Netzwerkinformationen über verschiedene Frequenzpunkte eines digitalen Fernsehers das Verfahren ferner aufweist:
Empfangen eines Kanalsuchbefehls und Durchführen des Schritts des Erhaltens von Netzwerkinformationen über verschiedene Frequenzpunkte eines digitalen Fernsehers, wenn der Kanalsuchbefehl empfangen wird.

3. Verfahren zum automatischen Erkennen eines Netzwerkbetreibers, um eine Datenkonfiguration zu erkennen, nach Anspruch 1, wobei der Schritt des Bestimmens eines Netzwerkbetreibers einer gegenwärtigen Ortsregion gemäß den erhaltenen Netzwerkinformationen über die verschiedenen Frequenzpunkte des digitalen Fernsehers aufweist:
gemäß den erhaltenen Netzwerkinformationen über die verschiedenen Frequenzpunkte des digitalen Fernsehers, Bestimmen des Netzwerkbetreibers der gegenwärtigen Ortsregion; und Erhalten einer Menge der bestimmten Netzwerkbetreiber.

4. Verfahren zum automatischen Erkennen eines Netzwerkbetreibers, um eine Datenkonfiguration zu erkennen, nach Anspruch 1, wobei der Netzwerkbetreiberidentifikator eine physikalische Adresse des Netzwerkbetreibers oder einen Erkennungscode des Netzwerkbetreibers aufweist.

5. Verfahren zum automatischen Erkennen eines Netzwerkbetreibers, um eine Datenkonfiguration zu erkennen, nach Anspruch 1, wobei der Schritt des Bestimmens des Netzwerkbetreibers der gegenwärtigen Ortsregion gemäß den erhaltenen Netzwerkinformationen über die verschiedenen Frequenzpunkte des digitalen Fernsehers aufweist:
Bestimmen von Netzwerkbetreiberregionsnamen aus den erhaltenen Netzwerkinformationen über die verschiedenen Frequenzpunkte des digitalen Fernsehers, die den verschiedenen Frequenzpunkten des digitalen Fernsehers entsprechen;
Bestimmen eines Netzwerkbetreibers aus den bestimmten Netzwerkbetreiberregionsnamen, dessen Regionsname der größten Menge an Frequenzpunkten entspricht;
und, falls der Netzwerkbetreiber, der gemäß den Netzwerkbetreiberidentifikatoren bestimmt wurde, mit dem Netzwerkbetreiber übereinstimmt, der gemäß den Netzwerkbetreiberregionsnamen bestimmt wurde, Bestimmen des übereinstimmenden Netzwerkbetreibers als den Netzwerkbetreiber der gegenwärtigen Ortsregion.

6. Vorrichtung zum automatischen Erkennen eines Netzwerkbetreibers, um eine Datenkonfiguration eines integrierten digitalen Fernsehers zu erkennen, wodurch eine Benutzerkonfigurationsfunktion des integrierten digitalen Fernsehers implementiert wird,
wobei die Vorrichtung aufweist:
ein Verarbeitungsmodul (10), das so konfiguriert ist, dass es Netzwerkinformationen über verschiedene Frequenzpunkte eines digitalen Fernsehers erhält,
wobei die Netzwerkinformationen eine Netzwerkinformationstabelle sind;
wobei das Verarbeitungsmodul (1) ferner so konfiguriert ist, dass es einen Netzwerkbetreiber einer gegenwärtigen Ortsregion bestimmt;
ein Analysemodul (20), das so konfiguriert ist, dass es den bestimmten Netzwerkbetreiber der gegenwärtigen Ortsregion mit vorgespeicherten Netzwerkbetreibern abgleicht, um einen vorgespeicherten Netzwerkbetreiber abzugleichen, der mit dem bestimmten Netzwerkbetreiber übereinstimmt;
wobei das Verarbeitungsmodul (10) ferner so konfiguriert ist, dass es:
gemäß einer Zuordnungsbeziehung zwischen einem vorgespeicherten Fernseherkonfigurationsparameter und dem vorgespeicherten Netzwerkbetreiber einen Fernseherkonfigurationsparameter, der dem abgeglichenen vorgespeicherten Netzwerkbetreiber entspricht, bestimmt; und
ein Konfigurationsmodul (30), das so konfiguriert ist, dass es:
gemäß dem bestimmten Fernseherkonfigurationsparameter die Datenkonfiguration abschließt;
**dadurch gekennzeichnet, dass** das Verarbeitungsmodul (10) ferner so konfiguriert ist, dass es:
Netzwerkbetreiberidentifikatoren bestimmt, die den verschiedenen Frequenzpunkten des digitalen Fernsehers entsprechen, und
unter den bestimmten mehreren Netzwerkbetreiberidentifikatoren einen Netzwerkbetreiber, dessen Identifikator der größten Menge an Frequenzpunkten entspricht, als den Netzwerkbetreiber der gegenwärtigen Ortsregion bestimmt.

7. Vorrichtung zum automatischen Erkennen eines Netzwerkbetreibers, um eine Datenkonfiguration zu erkennen, nach Anspruch 6, wobei das Verarbeitungsmodul (10) ferner so konfiguriert ist, dass es einen Kanalsuchbefehl empfängt; und die Netzwerkinformationen über die verschiedenen Frequenzpunkte des digitalen Fernsehers erhält, wenn der Kanalsuchbefehl empfangen wird.

8. Vorrichtung zum automatischen Erkennen eines Netzwerkbetreibers, um eine Datenkonfiguration zu erkennen, nach Anspruch 6, wobei das Verarbeitungsmodul ferner so konfiguriert ist, dass es gemäß der erhaltenen Netzwerkinformationen über die verschiedenen Frequenzpunkte des digitalen Fernsehers einen Netzwerkbetreiber einer gegenwärtigen Ortsregion bestimmt; und eine Menge der bestimmten Netzwerkbetreiber erhält.

9. Vorrichtung zum automatischen Erkennen eines Netzwerkbetreibers, um eine Datenkonfiguration zu erkennen, nach Anspruch 6, wobei der Netzwerkbetreiberidentifikator eine physikalische Adresse des Netzwerkbetreibers oder einen Erkennungscode des Netzwerkbetreibers aufweist.

10. Vorrichtung zum automatischen Erkennen eines Netzwerkbetreibers, um eine Datenkonfiguration zu erkennen, nach Anspruch 6, wobei
das Verarbeitungsmodul (10) ferner so konfiguriert ist, dass es: gemäß der erhaltenen Netzwerkinformationen über die verschiedenen Frequenzpunkte des digitalen Fernsehers Netzwerkbetreiberregionsnamen bestimmt, die mit den verschiedenen Frequenzpunkten des digitalen Fernsehers übereinstimmen;
einen Netzwerkbetreiber aus den bestimmten Netzwerkbetreiberregionsnamen bestimmt, dessen Regionsname der größten Menge an Frequenzpunkten entspricht; und
falls der Netzwerkbetreiber, der gemäß den Netzwerkbetreiberidentifikatoren bestimmt wurde, mit dem Netzwerkbetreiber übereinstimmt, der gemäß den Netzwerkbetreiberregionsnamen bestimmt wurde, den übereinstimmenden Netzwerkbetreiber als den Netzwerkbetreiber der gegenwärtigen Ortsregion bestimmt.

## Revendications

1. Procédé de reconnaissance automatique d'un opérateur de réseau de manière à réaliser une configuration de données d'une télévision numérique intégrée, de sorte de mettre en œuvre une fonction de personnalisation de ladite télévision numérique intégrée,
dans lequel le procédé comprend les étapes :
- d'acquisition d'informations de réseau sur divers points de fréquence d'une télévision numérique et, conformément aux informations de réseau acquises sur les divers points de fréquence de la télévision numérique, de détermination d'un opérateur de réseau d'une région de localisation courante, les informations de réseau étant une table d'informations de réseau ;
- de détermination d'un opérateur de réseau d'une région de localisation courante ;
- d'appariement de l'opérateur de réseau déterminé de ladite région de localisation courante avec des opérateurs de réseau pré-mémorisés de manière à apparier un opérateur de réseau pré-mémorisé qui soit compatible avec l'opérateur de réseau déterminé ;
- conformément à une relation de mappage entre un paramètre de configuration de télévision pré-mémorisé et l'opérateur de réseau pré-mémorisé, de détermination d'un paramètre de configuration de télévision correspondant à l'opérateur de réseau pré-mémorisé apparié ; et,
conformément au paramètre de configuration de télévision déterminé, d'achèvement de configuration de données ;
**caractérisé en ce que** l'opération de détermination de l'opérateur de réseau de la région de localisation courante comprend les étapes :
de détermination d'identifiants d'opérateur de réseau qui correspondent aux divers points de fréquence de la télévision numérique, et
de détermination, parmi les identifiants d'opérateur de réseau déterminés, d'un opérateur de réseau dont l'identifiant correspond à la plus grande quantité de points de fréquence comme opérateur de réseau de la région de localisation courante.

2. Procédé de reconnaissance automatique d'un opérateur de réseau pour réaliser une configuration de données selon la revendication 1, dans lequel avant l'étape d'acquisition d'informations de réseau sur divers points de fréquence d'une télévision numérique, le procédé comprend en outre les étapes :
de réception d'une instruction de recherche de canal et de réalisation de l'étape d'acquisition d'informations de réseau sur divers points de fréquence d'une télévision numérique lorsque l'instruction de recherche de canal est reçue.

3. Procédé de reconnaissance automatique d'un opérateur de réseau pour réaliser une configuration de données selon la revendication 1, dans lequel l'étape, conformément aux informations de réseau acquises sur les divers points de fréquence de la télévision numérique, de détermination d'un opérateur de réseau d'une région de localisation courante comprend les étapes,
conformément aux informations de réseau acquises sur les divers points de fréquence de la télévision numérique, de détermination de l'opérateur de réseau de la région de localisation courante ; et d'acquisition d'une quantité des opérateurs de réseau déterminés.

4. Procédé de reconnaissance automatique d'un opérateur de réseau pour réaliser une configuration de données selon la revendication 1, dans lequel l'identifiant d'opérateur de réseau comprend une adresse physique de l'opérateur de réseau ou un code de reconnaissance de l'opérateur de réseau.

5. Procédé de reconnaissance automatique d'un opérateur de réseau pour réaliser une configuration de données selon la revendication 1, dans lequel l'étape, conformément aux informations de réseau acquises sur les divers points de fréquence de la télévision numérique, de détermination de l'opérateur de réseau de région de localisation courante comprend en outre les étapes :
de détermination, à partir d'informations de réseau acquises sur les divers points de fréquence de télévision numérique, de noms de région d'opérateur de réseau qui correspondent aux divers points de fréquence de la télévision numérique ;
de détermination, parmi les noms de région d'opérateur de réseau déterminés, d'un opérateur de réseau dont le nom de région correspond à la plus grande quantité de points de fréquence ; et,
à condition que l'opérateur de réseau déterminé conformément aux identifiants d'opérateur de réseau soit compatible avec l'opérateur de réseau déterminé conformément aux noms de régions d'opérateur de réseau, de détermination de l'opérateur de réseau compatible comme opérateur de réseau de la région de localisation courante.

6. Dispositif de reconnaissance automatique d'un opérateur de réseau pour réaliser une configuration de données d'une télévision numérique intégrée de sorte de mettre en œuvre une fonction de personnalisation de ladite télévision numérique intégrée, dans lequel le dispositif comprend :
un module de traitement (10) configuré pour acquérir des informations de réseau sur divers points de fréquence d'une télévision numérique, les informations de réseau étant une table d'informations de réseau ; ledit module de traitement (1) étant en outre configuré pour déterminer un opérateur de réseau d'une région de localisation courante ;
un module d'analyse (20) configuré pour apparier l'opérateur de réseau déterminé de ladite région de localisation courante avec des opérateurs de réseau pré-mémorisés de manière à apparier un opérateur de réseau pré-mémorisé qui soit compatible avec l'opérateur de réseau déterminé ;
le module de traitement (10) étant en outre configuré pour: conformément à une relation de mappage entre un paramètre de configuration de télévision pré-mémorisé et l'opérateur de réseau pré-mémorisé, déterminer un paramètre de configuration de télévision correspondant à l'opérateur de réseau pré-mémorisé apparié ; et
un module de configuration (30) configuré pour : conformément au paramètre de configuration de télévision déterminé, achever une configuration de données ;
**caractérisé en ce que** le module de traitement (10) est en outre configuré pour :
déterminer des identifiants d'opérateur de réseau qui correspondent aux divers points de fréquence de la télévision numérique,
déterminer, parmi les multiples identifiants d'opérateur de réseau déterminés, un opérateur de réseau dont l'identifiant correspond à la plus grande quantité de points de fréquence comme opérateur de réseau de la région de localisation courante.

7. Dispositif de reconnaissance automatique d'un opérateur de réseau pour réaliser une configuration de données selon la revendication 6, dans lequel le module de traitement (10) est en outre configuré pour recevoir une instruction de recherche de canal ; et acquérir les informations de réseau sur les divers points de fréquence de la télévision numérique lorsque l'instruction de recherche de canal est reçue.

8. Dispositif de reconnaissance automatique d'un opérateur de réseau pour réaliser une configuration de données selon la revendication 6, dans lequel le module de traitement est en outre configuré pour, conformément aux informations de réseau acquises sur les divers points de fréquence de la télévision numérique, déterminer un opérateur de réseau d'une région de localisation courante ; et acquérir une certaine quantité des opérateurs de réseau déterminés.

9. Dispositif de reconnaissance automatique d'un opérateur de réseau pour réaliser une configuration de données selon la revendication 6, dans lequel l'identifiant d'opérateur de réseau comprend une adresse physique de l'opérateur de réseau ou un code de reconnaissance de l'opérateur de réseau.

10. Dispositif de reconnaissance automatique d'un opérateur de réseau pour réaliser une configuration de données selon la revendication 6, dans lequel :
le module de traitement (10) est en outre configuré pour: conformément aux informations de réseau acquises sur les divers points de fréquence de la télévision numérique,
déterminer des noms de région d'opérateur de réseau qui correspondent aux divers points de fréquence de la télévision numérique ;
déterminer, parmi les noms de région d'opérateur de réseau déterminés, un opérateur de réseau dont le nom de région correspond à la plus grande quantité de points de fréquence ; et
à condition que l'opérateur de réseau déterminé conformément aux identifiants d'opérateur de réseau soit compatible avec l'opérateur de réseau déterminé conformément aux noms de région d'opérateur de réseau, déterminer l'opérateur de réseau compatible comme opérateur de réseau de la région de localisation courante.
